# EUROPEAN PATENT SPECIFICATION

(11) **EP 2 242 725 B1**
(45) Date of publication and mention of the grant of the patent: **06.04.2016**
(21) Application number: 08868187.9
(22) Date of filing: 04.12.2008
(51) Int. Cl.: C02F 101/30, C02F 1/50, C02F 1/28, B01J 20/28, B01J 20/20, B01J 20/14

(54) **LIQUID FILTRATION SYSTEMS**
FLÜSSIGKEITSFILTRATIONSSYSTEME
SYSTÈMES DE FILTRATION DE LIQUIDE

(30) Priority: 21.12.2007 US 15860
(43) Date of publication of application: 27.10.2010
(73) Proprietor: 3M Innovative Properties Company, Saint Paul, MN 55133-3427 (US)
(72) Inventor: STOUFFER, Mark R., Saint Paul, Minnesota 55133-3427 (US); DAVID, Moses M., Saint Paul, Minnesota 55133-3427 (US)
(74) Representative: Vossius & Partner Patentanwälte Rechtsanwälte mbB
(86) International application number: PCT/US2008/085491
(87) International publication number: WO 2009/085553

(56) References cited:
- EP-A1- 1 437 376
- WO-A1-03/051498
- WO-A2-2007/109774
- KR-A- 20050 093 851
- US-A1- 2007 134 483
- US-A1- 2007 215 536
- US-B1- 6 764 601
- US-B2- 6 833 075

## Description

### TECHNICAL FIELD

The present disclosure relates to liquid filtration systems and filter media, wherein the filter media contains, for example, plasma-treated polymeric binders.

### BACKGROUND

Numerous types of home water filtration systems are commercially available. Traditionally, beds of loose carbon particles were used for removing metals and/or organic materials from water. Composite blocks can be made from combinations of sorptive materials, such as adsorbent activated carbon, and polymeric binders, such as ultra high molecular weight polyethylene (UHMW PE), that have been sintered together under conditions of heat and pressure and are useful in water filter technology. Carbon block technology, for example, provides comparable functionality to loose bed carbon particles without the particle shedding or taking up too much space. With carbon block technology, pressure drop across the block can increase as a result of increasing quantities of adsorptive materials. Moreover, exposure of carbon blocks to heat and pressure can limit the types of adsorptive materials available for use in the blocks. For example, carbon block technology is generally precluded from using adsorptive media that is sensitive to thermal degradation, such as ion exchange resins.

A limitation of current technology is that very small particles are required to make a filter that will remove cryptosporidium cysts and other small particulates. Use of very small activated carbon particles requires finer binder particles and more binder. Finer carbon is more difficult to handle and it is more difficult to produce to a controlled particle size. Further, the use of very fine adsorbent and binder particles yields a filter with high pressure drop and lower water flow.

A related problem is that blocks with very fine media particles require relatively high amounts of UHMW PE binder. High binder contents are needed to give a block with good mechanical strength and to minimize particle shedding. Typical binder levels for commercial cyst-rated water filter blocks range 25% to 55% by mass. Since polyethylene does not have any adsorptive function, use of higher binder levels limits the capacity of blocks for removal of water contaminants such as lead, VOCs, and chlorine.

Another difficulty in the current processes for making composite blocks is that carbon media-polymeric binder blends exhibit poor flow properties. Because of this, molds for making carbon blocks are generally not optimally filled. If molds are not filled to maximum density, more binder is required to hold media particles together. Also, differences in filling and fill density cause variations in filter flow properties and variations in performance. A common problem is that carbon-polymer blends tend to deaerate and agglomerate between the mixing step and mold filling step. If the carbon-polymer blend is agglomerated when molds are filled, then the mold does not fill to an optimum density and the filling is variable.

Silica as a fine particulate has been used previously as a powder flow aid. For example, small amounts of fumed silica are added to powder blends in the pharmaceutical industry in tablet forming processes. The use of fumed silica flow aid in making water filter blocks made from diatomaceous earth can result in blocks that are reduced in strength.

Still another limitation of current technology is the mechanical strength of blocks. Since the demand for water filters is trending toward smaller size and higher flow, there is a need for thinner walls and smaller outer diameters. Such blocks have low beam strength and this can lead to defects during production process or during handling and shipping.

Yet another limitation of current technology is the ability to make carbon blocks using granular media (larger than 100 mesh). Current technology uses blends of 325 mesh carbon particles (<43 micron) and 80x325 mesh particles (43-175 micron). Typical mean particle sizes are less than 90 micron. There is a need for low pressure drop blocks made from larger particles. It can be difficult, however, to make blocks with larger sizes of granular carbon, e.g., 50x200 mesh (75-295 micron).

A potential disadvantage of current technology is that the UHMW PE used as a binder is hydrophobic. This makes a filter difficult to wet. A filter with a low wettability may be a disadvantage for low pressure application like gravity-flow filtration.

US 2007/134483 A1 relates to an adsorption filter material that provides protection against chemical toxins, chemical weapons and pollutants, with a preferably multi-layer composite construction including at least one planar support layer with two opposing sides and an adsorption layer, provided on the support layer made from a material which adsorbs chemical toxins, the surface of at least one of the both sides of the support layer being modified by plasma treatment.

EP 1 437 376 A1 discloses a porous sintered body of thermoplastic resin particles comprising functional groups having adsorbability bonded through a graft polymer chain at the surface. US 2007/215536 A1 describes a filter cartridge for use in gravity-fed water treatment systems wherein filter elements include a dome-shaped hydrophilic porous particulate carbon powder block filter in a polymeric binder.

There is an ongoing need to provide water filtration systems that have high loadings of active material without increasing pressure drop across the system. It would be further desirable to use larger granular carbon and less binder material. In addition, there is need to provide filters that can be easily wetted.

### SUMMARY

Provided are filtration media, and systems for liquid purification that utilize plasma-treated binder particles in conjunction with sorptive media. In an aspect, provided are filtration media comprising an adsorptive media that comprises activated carbon and plasma-treated polymeric binder particles.

In an embodiment, the surfaces of the plasma-treated polymeric binder particles comprise an oxide, silicon, or both.

In a detailed embodiment, the activated carbon comprises particles having an average particle size of 45 micron or greater. Another embodiment provides that the polymeric binder particles further comprise an anti-microbial agent grafted thereto. One or more embodiments provide that the polymeric binder particles are present in an amount in the range of 5 to 30 % by weight of the media. Some embodiments may further include binder particles that were not subjected to plasma-treatment.

A detailed embodiment provides that the filtration media is effective to provide an increased cyst capacity as compared to a comparative filtration media that does not contain the plasma-treated polymeric binder particles. Another detailed embodiment provides that the filtration media is effective to provide an increased volatile organic component capacity as compared to a comparative filtration media that does not contain the plasma-treated polymeric binder particles. A further embodiment provides that the filtration media has increased beam strength, compared to a comparative filtration media that does not contain the plasma-treated polymeric binder particles. Another embodiment provides that the filtration media has increased hydrophilicity as compared to a comparative filtration media that does not contain the plasma-treated polymeric binder particles.

In one or more embodiments, the polymeric binder particles comprise polyethylene. Other embodiments provide that the polyethylene comprises ultra high molecular weight polyethylene. Further embodiments provide that the polymeric binder particles comprise particles having an irregular, convoluted surface. Certain embodiments provide that the particles having an irregular, convoluted surface are formed from ultra high molecular weight polyethylene. Some embodiments provide that the polymeric binder particles further comprise particles of substantially spherical shape.

Disclosed herein is a filtration media comprising activated carbon and a plasma-treated ultra high molecular weight polyethylene binder adherent to the activated carbon. A detailed embodiment provides that the activated carbon is present in an amount in the range of 50 to 85% by weight and the polyethylene binder is present in an amount in the range of 10 to 30 % by weight. In an embodiment, the polyethylene binder comprises particles having an irregular, convoluted surface. Some embodiments provide that the polyethylene binder further comprises an anti-microbial agent grafted thereto.

A detailed embodiment provides that the filtration media has increased hydrophilicity as compared to a comparative filtration matrix that does not contain the plasma-treated polymeric binder particles.

In a further aspect, provided is a filtration system comprising a filtration media formed from an adsorptive media that comprises activated carbon and a plasma-treated polymeric binder, a housing surrounding the filtration media, a fluid inlet, and a fluid outlet. In an embodiment, the adsorptive media comprises activated carbon, the polymeric binder comprises ultra high molecular weight polyethylene particles having an irregular, convoluted surface, and the surface of the polymeric binder comprises an oxide, silicon, or both.

Another aspect provides methods of filtering comprising contacting a fluid with a filtration media comprising an adsorptive media that comprises activated carbon and a plasma-treated polymeric binder.

In a detailed embodiment, the filtration media has an increased cyst capacity as compared to a comparative filtration media that does not contain the plasma-treated binder. In one or more embodiments, the method further comprises locating the filtration media in a gravity flow filter device.

In another aspect, provided are methods of making a filtration system, the methods comprising: treating polymeric binder particles with a plasma to form a plasma-treated polymeric binder; contacting an adsorptive media that comprises activated carbon with the treated particles to form a media mixture; heating the media mixture to form a filtration media; and inserting the filtration media in a housing to form the filtration system. In one embodiment, the method further comprises grafting an anti-microbial agent to the plasma-treated polymeric binder. In a detailed embodiment, the treating step comprises: providing the polymeric binder particles in a chamber; pulling vacuum on the chamber; subjecting the particles to a gas; and applying RF pulses to the particles. In one or more embodiments, the gas comprises silane, oxygen, or both. In another embodiment, the grafting step comprises: mixing the plasma-treated binder with the anti-microbial agent in an aqueous solution to form a mixture and drying the mixture.

### DETAILED DESCRIPTION

Provided are filtration media, and systems for liquid purification that utilize plasma-treated binder particles in conjunction with sorptive media. The plasma-treated binder particles are treated with a plasma gas, such as silane or oxygen or both to modify the binder particles to make them, for example, hydrophilic and more adhesive. The particles are mixed with sorptive media, comprising activated carbon, where the mixture is then sintered and formed into a block or element. High loadings of sorptive media (up to, for example, about 90% by weight) are possible. Further, the addition of silica to the surface of binder particles appears to improve flow properties without interfering with the binding process.

Reference to "fluid treatment unit" or "fluid filtration system" includes a system containing a filtration media and a method of separating raw fluid, such as untreated water, from treated fluid. This typically includes a filter housing for a filter element and an outlet to pass treated fluid away from the filter housing in an appropriate manner.

"Bulk wetting property" means the propensity of an article to absorb and soak up water. By improving hydrophilicity, wetting time of the article can be reduced.

"Porous article" means an article having open tortuous pathways from its surface to its interior.

"Plasma treatment" refers to a process where high frequency electric or magnetic fields are used to create free radicals of a particular gas in an atmosphere where a binder is present. The free radicals modify the surface of the binder and possibly improve its performance. Plasma treatment "functionalizes" the binder surface. This term can include any other plasma-induced chemical or physical reaction that can change the binder surface property, such as hydrophilicity.

Reference to "TMS" means tetramethylsilane gas, a gas used in plasma treatment.

"National Sanitation Foundation" or "NSF" refers to a private agency that certifies water filtration systems and materials used in filtration systems. NSF Standard 42 and 53, as used herein, are published standards that set forth test methods and acceptance criteria for water filtration systems for improving both aesthetic aspects and health effects of drinking water.

The term "impulse filling" or "applying impulses" means that a force is applied to the mold, causing a discrete, substantially vertical displacement that induces movement of at least a portion of the particles in the mold, causing the particles to assume a compact orientation in the mold. This includes indirect methods such as hammer blows to a table to which the molds are clamped and impacts to the table from a pneumatic cylinder, and any suitable direct methods that displace the molds with a series of jarring motions. In some embodiments, the impulse filling comprises a series of discrete displacements (i.e., impulses) applied to the mold. Impulse filling differs from vibration in that there is a period of non-movement or of little movement between the displacements. The period between displacements is typically at least 0.5 (in some embodiments, at least 1, 2, 3, 5, or even at least 10) seconds. The displacement applied to the mold has a vertical component. In some preferred embodiments, the vertical component (as opposed to the horizontal component) accounts for a majority (in some embodiments, a substantial majority (>75%), or even nearly all (>90%)) of the molds movement.

The term "UHMW PE" refers to ultra-high molecular weight polyethylene having molecular weight of, for example, at least 750,000 and is described in commonly-owned U.S. Patent No. 7,112,280, to Hughes et al., incorporated herein by reference in its entirety.

The term "particles having an irregular, convoluted surface" refers to particles of unique morphology as set forth in U.S. Pat. No. 7,112,272 (Hughes et al.), hereby incorporated by reference in its entirety, which, when compared to particles of substantially spherical shape, show higher surface areas and lower bulk density.

Detailed embodiments provide that the polymeric binder comprises ultra high molecular weight polyethylene. Other embodiments provide that the polymeric binder further comprises particles having a generally spherical, non-porous structure. In specific embodiments, the particles having the irregular, convoluted surface have an average particle size in the range of 10 to 120 (or 20-50, or even 30-40) microns. Other specific embodiments provide that the particles having the generally spherical, non-porous structure have an average particle size in the range of 10 to 100 (or 20-80, or even 30-65) microns. Reference to "small" convoluted particles includes particles generally having 30 micron mean and 0.25 g/cc density. Reference to "large" convoluted particles includes particles generally having 120 micron mean and 0.23 g/cc. Reference to "small" spherical particles includes particles generally having 60 micron mean and 0.45 g/cc.

The term "electrokinetic adsorption" includes processes that occur when particulates (called adsorbates) accumulate on the surface of a solid or very rarely a liquid (called adsorbent), through Coulombic force, or other electrostatic interaction thereby forming a molecular or atomic film.

The term "adsorptive media" includes materials (called adsorbents) having an ability to adsorb particles via different adsorptive mechanisms. These media can be in the form of, for example, spherical pellets, rods, fibers, molded particles, or monoliths with hydrodynamic diameter between about 0.01 to 10 mm. If such media is porous, this attribute results in a higher exposed surface area and higher adsorptive capacity. The adsorbents may have combination of micropore and macropore structure enabling rapid transport of the particles and low flow resistance. Reference to a "comparative filtration media" means a media that is formed from materials that have not been plasma-treated. That is, no portion of the binder used in the comparative filtration media has been processed with plasma gas such as TMS, O₂, or both. Reference to "comparative filtration matrix" means that the comparative filtration matrix contains a binder that has not been plasma-treated.

The use of plasma-treated binders in standard carbon block formulations provided some improvements over the current state of the art. For example, improved performance of blocks for removal in the NSF 53 test for reduction of cryptosporidium cysts was achieved. In addition, the use of plasma-treated binders permits lower binder contents and thus more active media in blocks, while maintaining strength and integrity. This enables higher capacity for removal of volatile organic compounds (VOC) on a gallons per block volume basis. Using plasma-treated binders also provides an ability to mold blocks with granular carbon (>100 micron mean particle size) with good mechanical strength. Break strengths of blocks are generally improved when plasma-treated binders are used. Further, blocks having more a hydrophilic property are obtained with plasma-treated binders, which, in turn, improves initial wetting.

Methods of plasma treatment of porous materials are provided in U.S. Patent Nos. 6,878,419 and 7,125,603, also, method and apparatus for plasma treatment of particles are provided in US Patent Nos. 6,015,597 and 6,197,120 the disclosures of which are incorporated by reference herein. In general terms, plasma treatment is achieved by treating the binder under vacuum with a gas, such as silane in the form of, for example, tetramethylsilane (TMS) or oxygen (O₂). For TMS treatment, TMS was introduced into a glass chamber at a flow rate of approximately 100 cc/min for 30 minutes. For oxygen treatment, oxygen gas was introduced into the chamber at a flow rate of approximately 180 cc/min for 30 minutes. For combined treatment, the TMS and O₂ treatments were performed sequentially for 30 minutes each. Generally, the pressure when TMS or oxygen gas was present in the chamber did not exceed about 1 torr. The materials in the chamber were then subjected to RF plasma in a pulsed mode. Pulsing was used to minimize the formation of powder dust resulting from gas phase polymerization. In treatments where binders were treated first in a TMS atmosphere, and then subsequently in an O₂ atmosphere, without intending to be bound by theory, it is believed that silicon oxides are deposited on the surface of the polymer binder. For treatment in O₂ gas only, without intending to be bound by theory, it is believed that the surface of the polymer is oxidized. Advantages similar to TMS followed by O₂ treatment were seen with O₂ treatment only. With regard to treatment in TMS gas only, advantages similar to the other treatments were seen with the exception of the hydrophilic effect.

In the case where the plasma treatment is done in two steps, the first plasma is derived from components comprising at least one organosilane having at least one C-H bond, which may be an sp³, sp² or sp C-H bond. Typically, the organosilane has a plurality of C-H bonds, for example, at least 2, at least 3, at least 5, at least 9, and/or even at least 12 C-H bonds, or more. Typically the organosilane(s) are selected such that they have sufficient vapor pressure under plasma treatment conditions that a plasma is formed.

Exemplary organosilanes having at least one C-H bond include: alkylsilanes such as, for example, tetramethylsilane, methylsilane, dimethylsilane, diethylsilane, diethylmethylsilane, propylsilane, trimethylsilane, and ethylsilane; alkoxysilanes and siloxanes such as, for example, tetraethylorthosilicate (TEOS), and tetramethylcyclotetrasiloxane (TMCTS); alkylenepolysilanes such as, for example, disilanomethane, bis(methylsilano)methane, 1,2-disilanoethane, 1,2-bis(methylsilano)ethane, 2,2-disilanopropane, dimethyldisilanoethane, dimethyldisilanopropane, tetramethyldisilanoethane, and tetramethyldisilanopropane; alkenylsilanes such as, for example, vinylmethylsilane, and divinyldimethylsilane; aryl silanes such as, for example, phenylsilane, phenyldimethylsilane, and phenyltrimethylsilane; alkylpolysilanes such as, for example, 1,1,2,2-tetramethyldisilane, hexamethyldisilane, 1,1,2,2,3,3-hexamethyltrisilane, and 1,1,2,3,3-pentamethyltrisilane. Combinations of organosilanes may also be used. The organosilane may have substituents such as, for example, amino groups, hydroxyl groups, and/or halo (e.g., fluoro, bromo, chloro) groups, although these may tend to diminish effectiveness of the first plasma treatment. In addition, the first plasma may additionally include gaseous component(s), for example, selected from the group consisting of: oxygen, nitrogen, nitrogen dioxide, nitrous oxide, ammonia, and sulfur dioxide, although these may tend to diminish effectiveness of the first plasma treatment.

Plasma-treated binders can be further subject to grafting with an anti-microbial agent. In one or more embodiments, carbon blocks were made with binders that were first plasma-treated with TMS followed by O₂, and then grafted with an anti-microbial agent. The antimicrobial agent as an organosilicon quaternary ammonium compound in the form of 3-trimethoxysilylpropyl dimethyloctadecyl ammonium chloride, available under the tradename AEM 5700 from Aegis of Midland, MI. In order to graft the anti-microbial, an aqueous solution containing the anti-microbial was prepared and then sprayed onto the plasma-treated binder with mixing. The material was then dried overnight in a convection oven at 85°C with a nitrogen gas flow. It was found that binders that were first plasma-treated with TMS followed by O₂, and then grafted with an organosilicon quaternary ammonium compound gave carbon blocks with dramatically improved performance for turbidity reduction. While not intending to be bound to a particular theory, it is postulated that the positive charge imparted to the binder in this process improves collection of charged particulates.

It was found that the use of plasma-modified binders in a carbon block formulation dramatically improved the efficiency of removal of cryptosporidium cysts. In our testing, a carbon block formulation that exhibited poor cyst reduction (failing the ANSI/NSF 53 standard) was modified to use plasma-treated binders. Commercial binders were replaced by the same binders functionalized by a plasma process, using TMS, oxygen (O₂), or both. Except for this, the formulation and process were identical. With binders treated with TMS followed by O₂, the blocks exhibited surprisingly robust cyst reduction, to the point that the effluent water had no detectable particles.

The improvement in cyst performance can allow manufacture of blocks with larger carbon particles. In current commercial carbon block technology, cyst retentive blocks contain activated carbon particles primarily of sizes less than 325 mesh (43 micron). With the functionalized binder, blocks have been made cyst retentive with carbon particles primarily between 80 and 325mesh (45 to 175 micron). This advantage enables the production of lower pressure drop, cyst-retentive blocks. It also allows use of less binder and more active media. Further, it can improve manufacturing, because ultra fine carbon particles are difficult to process and difficult to produce to a tight particle size distribution.

Use of plasma-treated binders can significantly increase the mechanical strength of blocks. For blocks with the same formulation, substituting plasma-treated (TMS, 02 or both) binders for the same commercial binders without modification has increased beam deflection force nearly 2X. Beam deflection force (BDF) or break strength is commonly used as a specification to assure that blocks are strong enough so as not to fail during shipping and handling. Production of blocks with higher beam strength enables manufacture of blocks with smaller diameters and with smaller wall thicknesses. The current trend in demand for water filter blocks is toward smaller blocks to fit in tight spaces (e.g., refrigerators and faucets). Another trend is for higher water flow rates at lower pressure drops. This can be enabled by using smaller block wall thickness.

Use of plasma-modified binders reduces the required binder content and thereby allows use of more active media. In current carbon block technology, an exemplary formulation contains a binder content of around 50% and an active media content of around 50% by mass. Using plasma functionalized binders, blocks have been made with binder contents as low as 10% by mass. These low binder contents have been applied to blocks with a difficult-to-mold geometry (e.g., 1.1" ID X 9/16" ID X 6" long).

Blocks made with low binder contents have shown dramatically improved performance for VOC removal in terms of gallons capacity per unit block volume. VOC capacities 2 to 4 times higher than that of current commercial carbon blocks have been achieved. For example, blocks 1.1" diameter and 5" long have achieved VOC service life (per NSF Standard 53) of well over 160 gallons water (>45 gal/in³). Most commercial water filter blocks have VOC capacities less than 20 gal/in³.

The use of plasma-treated binders allows production of blocks from granular carbons (>100 micron mean). Using blocks containing silica-enhanced binders have been made with 80x200 and 50x200 mesh carbons with no cracking and with minimal particle shedding. This is in sharp contrast to blocks made with the same binders without silica modification. With standard binders, blocks made with these particle sizes have shown very high frequency of cracking and substantial particle shedding.

Another utility of the current invention is to improve the wetting of the binder in a carbon block. Other components in a carbon block (activated carbon, lead reduction media, etc.) are more hydrophilic than polyethylene. A block with improved wettability would have an advantage for gravity flow filtration applications like pitcher applications, where rapid wetting of media is important.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the disclosure are approximations, the numerical values set forth in the specific examples are reported as precisely as possible. Any numerical value, however, inherently contain certain errors necessarily resulting from the standard deviation found in their respective testing measurements.

### EXAMPLES

### EXAMPLE 1

UHMW PE binders in the form of small convoluted particles (Ticona GUR 2126) and small spheres (Ticona GUR 4150-3) were surface modified in one of three ways using: tetramethylsilane (TMS) only, oxygen only, and TMS followed by oxygen. Air flow, BDF, and cyst tests were performed on the blocks.

Generally, a binder was treated in batches of approximately 1500 g in a pilot reactor. The pilot reactor contained a rotating glass tube in an electromagnetic field. About 500 mL of inert beads was added to the binder in order to help it stir in the pilot reactor. Once the binder was placed into the glass tube, the gas inside was evacuated to a pressure of about 0.3 torr. The rotor on the glass chamber was set to rotate at about 8 rpm. For tetramethylsilane treatment, TMS was introduced into the chamber at a flow rate of approximately 100 cc/min for 30 minutes. For oxygen treatment, oxygen gas was introduced into the chamber at a flow rate of approximately 180 cc/min for 30 minutes. For combined treatment, TMS gas and O₂ treatments above were performed sequentially for 30 minutes each. The pressure when TMS or oxygen gas was present in the treatment chamber did not exceed about 1 torr.

Once the desired atmosphere was created, RF pulsing was initiated with a forward of approximately 200W and reflection of approximately 40W. When treatment was complete, the binder was removed from the reactor and the inert beads were removed using a sifter.

For each of the 3 different treatments and 1 control with untreated binder, a batch of 24 blocks (1.1" OD X 4.5" L) was made. The formulation of the blocks was as follows.

| Material | Wt % |
|---|---|
| Coconut activated carbon, nominal 100 micron mean | 60 |
| Coconut activated carbon, nominal 20 micron | 17 |
| Titanium silicate lead removal media | 10 |
| Treated UHMWPE (small convoluted) binder | 6.5 |
| Treated UHMWPE (small sphere) binder | 6.5 |

Blocks were made in molds 6" long X 1.1" OD. Molds were filled by impulse filling to achieve maximum density. Molds were baked in a convection oven for 1 hour at 177°C, eight at a time. After removal from the convection oven, blocks were compressed in their mold with a force of approximately 50 lbf. Blocks had an OD of 1.1", ID of .375", and were cut to a length of 4.5". Blocks had a weight of approximately 37-39 grams. Blocks were end-capped and randomly allocated to their respective tests. The BDF sample size was 16, the results for which are provided in Table 1a, and the cyst tests sample size was 8, the results for which are provided in Table 1b.

**TABLE 1a:**

| | | TMS + O₂ | TMS | O₂ | None |
|---|---|---|---|---|---|
| AF | Mean | 17.7 | 18.4 | 18.4 | 17.7 |
| | Sdev | 1.3 | 0.7 | 1.5 | 1.0 |
| (25 L/min in H₂O) | Max | 21.6 | 20.5 | 23.1 | 20.8 |
| | Min | 13.7 | 16.4 | 13.8 | 14.6 |
| BDF | Mean | 14.0 | 13.2 | 14.7 | 11.4 |
| | Sdev | 1.5 | 1.7 | 1.7 | 1.6 |
| (lbf) | Max | 18.4 | 18.4 | 19.8 | 16.1 |
| | Min | 9.6 | 8.0 | 9.6 | 6.7 |

**TABLE 1b:**

| | Pass | Fail |
|---|---|---|
| TMS + O₂ | 100% | 0% |
| TMS | 100% | 0% |
| O₂ | 100% | 0% |
| None | 88% | 12% |

The BDF data suggests that there is an improvement in strength between treated blocks by either of the 3 treatment methods, compared to untreated blocks. Blocks treated with oxygen plasma were the strongest.

The cyst test data show that for blocks made with plasma-treated binders (oxygen, TMS or TMS followed by O₂), all blocks passed with at least 99.95% efficiency. For blocks made with untreated polymers, 12% of the blocks tested failed the cyst test.

### EXAMPLE 2

Carbon blocks were made with binders treated with TMS followed by O₂ according to the formula of Table 2a:

**TABLE 2a:**

| Material | Wt % |
|---|---|
| Coconut activated carbon, nominal 100 micron mean | 60 |
| Coconut activated carbon, nominal 20 micron | 20 |
| Titanium silicate lead removal media | 7 |
| Treated UHMWPE (small convoluted) binder (Ticona GUR 2126) | 6.5 |
| Treated UHMWPE (small sphere) binder (Ticona GUR 4150-3) | 6.5 |

Materials were mixed for 2 minutes in a drill press mixer. Molds (1.1"OD X 3/8" ID X 12" long) were filled by impulse filling to achieve maximum density. Molds were baked at 180°C for 45 minutes in a convection oven. After baking, the blocks were compressed with a piston with a constant force of 100 lbf for 30 sec. Blocks were cooled and removed from the molds. Blocks were cut to lengths of 4" and then end capped.

Table 2b shows data for 8 blocks made by this method:

**TABLE 2b**

| Block # TMS & O₂ Plasma | Mass, g | Air Flow Resistance at 25 L/min, in H₂O | Pressure drop at 0.5 gpm, psi |
|---|---|---|---|
| 2-A | 33.8 | 54.9 | - |
| 2-B | 33.5 | 52.8 | - |
| 2-C | 34.4 | 57.8 | - |
| 2-D | 33.7 | 51.8 | 12.2 |
| 2-E | 33.5 | 51.7 | - |
| 2-F | 34.6 | 58.7 | - |
| 2-G | 33.4 | 50.9 | 11.7 |
| 2-H | 33.8 | 54.2 | - |
| Mean | 33.8 | 54.1 | - |
| Std. Deviation | 0.44 | 2.9 | - |

Tests were conducted on blocks 2-D and 2-G to measure performance of these blocks for cyst reduction from water. These tests followed NSF Standard 53 protocol using a surrogate test dust. Both blocks 2-D and 2-G showed robust performance for cyst reduction. That is, the blocks showed >99.95 efficiency. The effluent particle count for 3-4 micron particles was non-detect throughout the test.

### EXAMPLE 3

### COMPARISON

Carbon blocks were made with polyethylene binders (with no plasma treatment) according to the formula of Table 3a:

**TABLE 3a**

| Material | Wt % |
|---|---|
| Coconut activated carbon, nominal 100 micron mean | 60 |
| Coconut activated carbon, nominal 20 micron | 20 |
| Titanium silicate lead removal media | 7 |
| Treated UHMWPE (small convoluted )binder (Ticona GUR 2126) | 6.5 |
| Treated UHMWPE (small sphere) binder (Ticona GUR 4150-3) | 6.5 |

Blocks made in accordance with the method of Example 2 were tested and had the properties according to Table 3b:

**TABLE 3b**

| Block # TMS & O₂ Plasma | Mass, g | Air Flow Resistance at 25 L/min, in H₂O | Pressure drop at 0.5 gpm, psi |
|---|---|---|---|
| 3-A | 31.8 | 42.8 | 8.5 |
| 3-B | 33.2 | 50.1 | - |
| 3-C | 33.3 | 54.1 | - |
| 3-D | 31.1 | 38.8 | 8.0 |
| 3-E | 33.3 | 48.8 | - |
| 3-F | 32.0 | 42.0 | - |
| 3-G | 33.7 | 54.6 | - |
| 3-H | 31.6 | 38.8 | - |
| Mean | 32.5 | 46.3 | - |
| Std. Deviation | 0.98 | 6.5 | - |

As shown, the standard deviations in the block mass and in the air flow resistance were more than double those for blocks made with the plasma-treated binder in Example 3. Also, the mean air flow resistance and mean block mass for the block of Example 2 were higher than those of Example 3. These are indications that the modified binder improved mold filling, giving a higher fill density and a more reproducible fill density.

Tests were conducted on blocks 3-A and 3-D to measure performance of these blocks for cyst reduction from water, following an NSF Standard 53 protocol using a surrogate test dust. Both blocks made with binder that was not modified failed the test for cyst reduction.

### EXAMPLE 4

### COMPARISON

Carbon blocks were made with polyethylene binders (with no plasma treatment) according to the formula of Table 4a. The formulation, compared with Example 3, was adjusted by adding more fine carbon to improve cyst performance.

**TABLE 4a**

| Material | Wt % |
|---|---|
| Coconut activated carbon, nominal 100 micron mean | 43 |
| Coconut activated carbon, nominal 20 micron | 35 |
| Titanium silicate lead removal media | 7 |
| UHMWPE (small convoluted) binder (Ticona GUR 2126) | 7.5 |
| UHMWPE (small sphere) binder (Ticona GUR 4150-3) | 7.5 |

Blocks made in accordance with the method of Example 2 were tested and had the properties according to Table 4b.

**TABLE 4b:**

| Block # (No Plasma) | Compression force, lbf | Pressure drop at 0.5 gpm, psi | Cyst performance |
|---|---|---|---|
| 4-A | 50 | 10.1 | Fail |
| 4-B | 100 | 12.2 | Marginal pass |
| 4-C | 100 | 13.4 | Marginal pass |
| 4-D | 200 | 17.2 | Marginal pass |
| 4-E | 200 | 14.3 | Marginal pass |
| 4-F | 300 | 15.8 | Fail |

In these blocks made from binders without plasma treatment, tests characterized as "Fail" had efficiencies less than 99.95% and failed the NSF 53 criterion. Tests characterized as "Marginal Pass" had efficiencies above 99.95% at the prescribed NSF sample points, but at other points during the test, efficiency dropped below 99.95%. Also, the tests labeled "Marginal Pass" had detectable particles measured in the effluent.

### EXAMPLE 5

Carbon blocks were made with binders treated with TMS followed by O₂ according to the formula of Table 5a:

**TABLE 5a**

| Material | Wt % |
|---|---|
| Coconut activated carbon, nominal 100 micron mean | 20 |
| Coconut activated carbon, nominal 20 micron | 45 |
| Titanium silicate lead removal media | 7 |
| Treated UHMWPE (small convoluted) binder (Ticona GUR 2126) | 10 |
| Treated UHMWPE (small sphere) binder (Ticona GUR 4150-3) | 18 |

Blocks made in accordance with the method of Example 2 were tested and had the properties according to Table 5b:

**TABLE 5b**

| Block # (TMS & O₂ Plasma) | Mass, g | Air Flow Resistance at 25 L/min, in H₂O | Beam Deflection Force, lbf |
|---|---|---|---|
| 5-A | 69.3 | 92.2 | 63 lbf |
| 5-B | 68.0 | 86.7 | 55 lbf |
| 5-C | 70.6 | 100 | 74 lbf |
| 5-D | 68.7 | 91.1 | 55 lbf |

The beam deflection force is defined as the force required to break the block when it is supported on both ends and subjected to a force perpendicular to the block applied at a point equidistant from the ends of the block. It is routinely used as a measure of block strength and is used as a specification to ensure that blocks do not break during shipping and handling.

### EXAMPLE 6

### COMPARISON

Carbon blocks were made with polyethylene binders (with no plasma treatment) according to the formula of Table 6a:

**TABLE 6a**

| Material | Wt % |
|---|---|
| Coconut activated carbon, nominal 100 micron mean | 20 |
| Coconut activated carbon, nominal 20 micron | 45 |
| Titanium silicate lead removal media | 7 |
| Treated UHMWPE (small convoluted) binder (Ticona GUR 2126) | 10 |
| Treated UHMWPE (small sphere) binder (Ticona GUR 4150-3) | 18 |

Blocks made in accordance with the method of Example 2 were tested and had the properties according to Table 6b:

**TABLE 6b**

| Block # (No Plasma) | Mass, g | Air Flow Resistance at 25 L/min, in H₂O | Beam Deflection Force, lbf |
|---|---|---|---|
| 6-A | 66.7 | 76.6 | 48 lbf |
| 6-B | 67.0 | 72.2 | 49 lbf |
| 6-C | 64.8 | 60.6 | 42 lbf |
| 6-D | 68.6 | 78.4 | 53 lbf |

As shown, the beam deflection force was generally lower for blocks made without the plasma-treated binder in Example 6 as compared to the blocks of Example 5. This indicates that the modified binder improved beam deflection force.

### EXAMPLE 7

Carbon blocks were made with binders treated with TMS followed by O₂ according to the formula of Table 7a:

**TABLE 7a**

| Material | Wt % |
|---|---|
| Coconut activated carbon, nominal 100 micron mean | 63 |
| Coconut activated carbon, nominal 20 micron | 20 |
| Titanium silicate lead removal media | 7 |
| Treated UHMWPE (small convoluted) binder (Ticona GUR 2126) | 5 |
| Treated UHMWPE (small sphere) binder (Ticona GUR 4150-3) | 5 |

Blocks made in accordance with the method of Example 2 were tested. These blocks were intact with no cracking. Mechanical strength and the amount of particle shedding were deemed acceptable for water filtration application. The total binder content of the blocks was 10%. The total active media content was 90%.

### EXAMPLE 8

Blocks made with binders that were plasma-treated first with TMS and followed by O₂ were produced in accordance with the formula in Example 2, Table 2a, having 1.1" OD. Table 8 summarizes initial VOC test results for these blocks. Measurements of concentrations of chloroform (CHCl₃) in the effluent water when challenged with water containing 300 ppb chloroform are provided as a function of gallons water treated. In the NSF 53 protocol, the filter must maintain an effluent CHCl₃ level below 15 ppb (95% reduction) throughout its rated service life.

**TABLE 8**

| | | | | Breakthrough CHCl₃ concentration (ppb) at given volume (gal) | | | | | |
|---|---|---|---|---|---|---|---|---|---|
| Block # TMS & O₂ Plasma | Block Length, in. | ID, in. | Vol, in³ | 40 gal | 80 gal | 100 gal | 120 gal | 140 gal | 160 gal |
| 8-A | 3.5 | 9/16 | 2.46 | 1.5 | 2.3 | 15 | 50 | 95 | 139 |
| 8-B | 5.0 | 9/16 | 3.51 | <0.5 | 0.88 | 1.2 | 1.4 | 1.9 | 4.1 |
| 8-C | 4.0 | 3/8 | 3.36 | <0.5 | <0.5 | 1.1 | 2.6 | 15 | 39 |
| 8-D | 4.5 | 3/8 | 3.78 | <0.5 | <0.5 | 0.5 | 0.6 | 0.7 | 2.5 |
| 8-E | 4.0 | 3/8 | 3.36 | ND | <0.5 | <0.5 | 0.7 | 2.3 | 7.6 |
| 8-F | 4.5 | 3/8 | 3.78 | 0.7 | 1.3 | 2.7 | 7.0 | 26 | 32 |
| 8-G | 4.5 | 3/8 | 3.78 | <0.5 | <0.5 | <0.5 | <0.5 | 0.6 | 0.7 |

The results show > 160 gal VOC capacity was attained with a block 4.5" long. For the 5" block, the volume water treated for VOC per unit block volume was >45 gallons/in³.

### EXAMPLE 9

Carbon blocks were made with binders treated with TMS followed by O₂ according to the formula of Table 9. The carbon used was granular in contrast to the fine carbon of the previous examples.

**Table 9**

| Material | Wt % |
|---|---|
| Mead Westvaco Aquaguard 80X200 | 86 |
| Treated UHMWPE (large convoluted) binder Ticona GUR 2122 | 14 |

Blocks of size 3.5" OD X 0.75" ID X 20" L were made according to the method of Example 2, except that bake time was longer (about 2 hours) to allow heat transfer in the larger mold.

All blocks were intact (no cracks) and showed minimal particle shedding. All previous attempts to make blocks with this carbon particle size and with this block geometry yielded defective blocks (cracking).

### EXAMPLE 10

Carbon blocks, formed with a coarser carbon PSD were made with binders treated with TMS followed by O₂ according to the formula of Table 10a:

**TABLE 10a**

| Material | Wt % |
|---|---|
| Coconut activated carbon, nominal 100 micron mean | 70 |
| Coconut activated carbon, nominal 20 micron | 10 |
| Titanium silicate lead removal media | 7 |
| Treated UHMWPE (small convoluted) binder (Ticona GUR 2126) | 6.5 |
| Treated UHMWPE (small sphere) binder (Ticona GUR 4150-3) | 6.5 |

Table 10b shows data for 4 blocks made according to the method of Example 2:

**TABLE 10b**

| Block # TMS & O₂ Plasma | Air Flow Resistance at 25 L/min, in H₂O | Pressure drop at 0.5 gpm, psi |
|---|---|---|
| 10-A | 76.3 | 14.8 |
| 10-B | 66.0 | 13.0 |
| 10-C | 56.7 | 12.9 |
| 10-D | 64.4 | 12.2 |

Tests were conducted on these blocks to measure performance of these blocks for cyst reduction from water. These tests followed NSF Standard 53 protocol using a surrogate test dust. All of the blocks 10-A to 10-D showed robust performance for cyst reduction.

### EXAMPLE 11

Disks were made with binders treated with TMS followed by O₂ according to the formula of Table 11 a:

**TABLE 11a**

| Material | Wt % |
|---|---|
| Coconut activated carbon, nominal 100 micron mean | 80 |
| Treated UHMWPE (small convoluted) binder (Ticona GUR 2126) | 20 |

The above components were mixed and then molded into disks (4.5" diameter X 3/8" thick). A cap was placed on mold but the mold was not compressed.

The above disks were tested for wettability with water. 10 mL of tap water was applied to the surface of the disk using a syringe. Water was applied over a period of 5 sec. The total time for water on the disk to be completely absorbed into the disk was then recorded. Data from this test are shown in Table 11b:

**TABLE 11b**

| Block # TMS & O₂ Plasma | Time for complete water absorption, sec |
|---|---|
| 11-A | 31 |
| 11-B | 32 |
| 11-C | 38 |
| 11-D | 45 |
| 11-E | 32 |
| 11-F | 24 |
| 11-G | 19 |
| Mean | 32 |

### EXAMPLE 12

### COMPARISON

Disks were made with polyethylene binders (with no plasma treatment) according to the formula of Table 12a:

**TABLE 12a**

| Material | Wt % |
|---|---|
| Coconut activated carbon, nominal 100 micron mean | 80 |
| UHMWPE (small convoluted) binder (Ticona GUR 2126) | 20 |

Disks were made by the method of Example 11 and tested for wettability according to Example 11. Data from the testing are shown in Table 12b:

**TABLE 12b**

| Block # No Plasma | Time for complete water absorption, sec |
|---|---|
| 12-A | 40 |
| 12-B | 64 |
| 12-C | 59 |
| 12-D | 51 |
| 12-E | 97 |
| 12-F | 150 |
| Mean | 87 |

As shown, the wettability time was generally higher for disks made without the plasma-treated binder in Example 12 as compared to the disks of Example 11. This indicates that the modified binder improved wettability.

### EXAMPLE 13

Carbon blocks were made with binders that were first treated with TMS followed by O₂, and then grafted with an anti-microbial agent. The antimicrobial agent as an organosilicon quaternary ammonium compound in the form of 3-trimethoxysilylpropyl dimethyloctadecyl ammonium chloride, available under the tradename AEM 5700 from Aegis of Midland, MI. In order to graft the anti-microbial, an aqueous 1% solution containing the anti-microbial was sprayed onto the plasma-treated binder and mixed to the consistency of a paste. The material was then dried overnight in a convection oven at a temperature of 85 C with nitrogen gas flowing through the oven

Carbon blocks were prepared according to the formula of Table 13:

**TABLE 13**

| Material | Wt % |
|---|---|
| Coconut Shell activated carbon (-325 mesh) | 19 |
| Coconut Shell activated carbon (80X 325 mesh) | 21 |
| Titanium silicate lead removal media | 10 |
| Untreated UHMWPE (large convoluted) binder (Ticona GUR 2122) | 20 |
| Treated & AM grafted UHMWPE (small convoluted) binder (Ticona GUR 2126) | 30 |

Blocks having 2.1" OD x 9.3" long were prepared. These blocks were tested for turbidity according NSF 53 standards and achieved a reduction of turbidity in the effluent to less than 0.25 NTU for over 50 cycles. The NSF standard requires a reduction of 0.5 NTU.

### EXAMPLE 14

Carbon blocks were made with binders that were first treated with TMS followed by O₂, and then grafted with an anti-microbial agent, as discussed by Example 13.

Carbon blocks were prepared according to the formula of Table 14:

**TABLE 14**

| Material | Wt % |
|---|---|
| Coconut activated carbon, nominal 100 micron mean | 60 |
| Coconut activated carbon, nominal 20 micron | 17 |
| Titanium silicate lead removal media | 10 |
| Treated & AM grafted UHMWPE (small sphere) binder (Ticona GUR 4150-3) | 6.5 |
| Treated & AM grafted UHMWPE (small convoluted) binder (Ticona GUR 2126) | 6.5 |

Blocks having 1.1" OD x 4" long were prepared using impulse filling and curing with compression. These blocks were tested for turbidity according NSF 53 standards and achieved a reduction of turbidity in the effluent to less than 0.5 NTU for 19 cycles. For a comparative block having a binder that was not plasma treated, the block failed the turbidity test. That is, for 19 cycles with the comparative block, the turbidity results were greater than 0.5 NTU.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Furthermore, the particular features, structures, materials, or characteristics may be combined in any suitable manner in one or more embodiments.

Although the invention herein has been described with reference to particular embodiments, it is to be understood that these embodiments are merely illustrative of the principles and applications of the present invention. It will be apparent to those skilled in the art that various modifications and variations can be made to the method and apparatus of the present invention without departing from the spirit and scope of the invention. Thus, it is intended that the present invention include modifications and variations that are within the scope of the appended claims and their equivalents.

## Claims

1. A filtration media comprising an adsorptive media that comprises activated carbon and plasma-treated polymeric binder particles.

2. The filtration media of claim 1, wherein the surfaces of the plasma-treated polymeric binder particles comprise an oxide, silicon, or both.

3. The filtration media of claim 1, wherein the activated carbon comprises particles having an average particle size of 45 micron or greater.

4. The filtration media of claim 1, wherein the polymeric binder particles further comprise an anti-microbial agent grafted thereto.

5. The filtration media of claim 1, wherein the polymeric binder particles are present in an amount in the range of 5 to 30 % by weight of the media.

6. The filtration media of claim 1, wherein the polymeric binder particles comprise ultra high molecular weight polyethylene particles having an irregular, convoluted surface.

7. The filtration media of claim 6, wherein the polymeric binder particles further comprise particles of substantially spherical shape.

8. The filtration media of claim 1, wherein the polymeric binder particles comprise plasma-treated ultra high molecular weight polyethylene binder that is adherent to the activated carbon.

9. The filtration media of claim 8, wherein the activated carbon is present in an amount in the range of 50 to 85% by weight and the polyethylene binder is present in an amount in the range of 10 to 30 % by weight.

10. A filtration system comprising a filtration media according to claim 1, a housing surrounding the filtration media, a fluid inlet, and a fluid outlet.

11. The filtration system of claim 10, wherein the adsorptive media comprises activated carbon, the polymeric binder comprises ultra high molecular weight polyethylene particles having an irregular, convoluted surface, and the surface of the polymeric binder comprises an oxide, silicon, or both.

12. A method of filtering comprising contacting a fluid with the filtration media of claim 1.

13. A method of making a filtration system, the method comprising:
treating polymeric binder particles with a plasma to form a plasma-treated polymeric binder;
contacting an adsorptive media that comprises activated carbon with the treated particles to form a media mixture;
heating the media mixture to form a filtration media; and
inserting the filtration media in a housing to form the filtration system.

## Patentansprüche

1. Filtermedium umfassend ein Adsorptionsmedium, das Aktivkohle und plasmabehandelte polymere Bindemittelpartikel umfasst.

2. Filtermedium nach Anspruch 1, wobei die Oberflächen der plasmabehandelten polymeren Bindemittelpartikel ein Oxid, Silicium oder beides umfassen.

3. Filtermedium nach Anspruch 1, wobei die Aktivkohle Partikel mit einer durchschnittlichen Partikelgröße von 45 Mikrometer oder größer umfasst.

4. Filtermedium nach Anspruch 1, wobei die polymeren Bindemittelpartikel ferner einen daran aufgepfropften antimikrobiellen Wirkstoff umfassen.

5. Filtermedium nach Anspruch 1, wobei die polymeren Bindemittelpartikel in einer Menge im Bereich von 5 bis 30 Gewichts-% des Mediums vorhanden sind.

6. Filtermedium nach Anspruch 1, wobei die polymeren Bindemittelpartikel Polyethylenpartikel mit ultrahohem Molekulargewicht umfassen, die eine unregelmäßige, unebene Oberfläche aufweisen.

7. Filtermedium nach Anspruch 6, wobei die polymeren Bindemittelpartikel ferner Partikel mit im Wesentlichen kugeliger Form umfassen.

8. Filtermedium nach Anspruch 1, wobei die polymeren Bindemittelpartikel plasmabehandeltes Polyethylen-Bindemittel mit ultrahohem Molekulargewicht, das an der Aktivkohle haftet, umfassen.

9. Filtermedium nach Anspruch 8, wobei die Aktivkohle in einer Menge im Bereich von 50 bis 85 Gewichts-% vorhanden ist und das Polyethylen-Bindemittel in einer Menge im Bereich von 10 bis 30 Gewichts-% vorhanden ist.

10. Filtersystem umfassend, ein Filtermedium nach Anspruch 1, ein das Filtermedium umgebende Gehäuse, einen Fluideinlass und einen Fluidauslass.

11. Filtersystem nach Anspruch 10, wobei das Adsorptionsmedium Aktivkohle umfasst, das polymere Bindemittel Polyethylenpartikel mit ultrahohem Molekulargewicht mit einer unregelmäßigen, unebenen Oberfläche umfasst und die Oberfläche des polymeren Bindemittels ein Oxid, Silicium oder beides umfasst.

12. Filterverfahren, umfassend das Inkontaktbringen eines Fluids mit dem Filtermedium nach Anspruch 1.

13. Verfahren zum Herstellen eines Filtersystems, wobei das Verfahren umfasst:
Behandeln von polymeren Bindemittelpartikeln mit einem Plasma, um ein plasmabehandeltes polymeres Bindemittel zu bilden; Inkontaktbringen eines Adsorptionsmediums, das Aktivkohle umfasst, mit den behandelten Partikeln, um eine Mediummischung zu bilden;
Erwärmen der Mediummischung, um ein Filtermedium zu bilden; und
Einbringen des Filtermediums in ein Gehäuse, um das Filtersystem zu bilden.

## Revendications

1. Milieu de filtration comprenant un milieu d'adsorption qui comprend du charbon actif et des particules de liant polymère traitées au plasma.

2. Milieu de filtration selon la revendication 1, dans lequel les surfaces des particules de liant polymère traitées au plasma comprennent un oxyde, du silicium, ou l'un et l'autre.

3. Milieu de filtration selon la revendication 1, dans lequel le charbon actif comprend des particules présentant une taille moyenne de particules de 45 micromètres ou plus.

4. Milieu de filtration selon la revendication 1, dans lequel les particules de liant polymère comprennent en outre un agent antimicrobien greffé sur celles-ci.

5. Milieu de filtration selon la revendication 1, dans lequel les particules de liant polymère sont présentes en une quantité de l'ordre de 5 à 30 % en poids du milieu.

6. Milieu de filtration selon la revendication 1, dans lequel les particules de liant polymère comprennent des particules de polyéthylène à masse moléculaire ultra élevée possédant une surface convolutée irrégulière.

7. Milieu de filtration selon la revendication 6, dans lequel les particules de liant polymère comprennent en outre des particules de forme sensiblement sphérique.

8. Milieu de filtration selon la revendication 1, dans lequel les particules de liant polymère comprennent un liant polyéthylène à masse moléculaire ultra élevée traité au plasma qui adhère au charbon actif.

9. Milieu de filtration selon la revendication 8, dans lequel le charbon actif est présent en une quantité de l'ordre de 50 à 85 % en poids et le liant polyéthylène est présent en une quantité de l'ordre de 10 à 30 % en poids.

10. Système de filtration comprenant un milieu de filtration selon la revendication 1, un logement entourant le milieu de filtration, une entrée de fluide, et une sortie de fluide.

11. Système de filtration selon la revendication 10, dans lequel le milieu d'adsorption comprend du charbon actif, le liant polymère comprend des particules de polyéthylène à masse moléculaire ultra élevée possédant une surface convolutée irrégulière, et la surface du liant polymère comprend un oxyde, du silicium, ou l'un et l'autre.

12. Procédé de filtration comprenant la mise en contact d'un fluide avec le milieu de filtration selon la revendication 1.

13. Procédé de fabrication d'un système de filtration, le procédé comprenant :
le traitement de particules de liant polymère avec un plasma de façon à former un liant polymère traité au plasma ; la mise en contact d'un milieu d'adsorption qui comprend du charbon actif avec les particules traitées de façon à former un mélange de milieux ;
le chauffage du mélange de milieux de façon à former un milieu de filtration ; et
l'insertion du milieu de filtration dans un logement de façon à former le système de filtration.
